# EUROPÄISCHE PATENTSCHRIFT

(11) **EP 1 310 168 B1**
(45) Veröffentlichungstag und Bekanntmachung des Hinweises auf die Patenterteilung: **21.07.2004**
(21) Anmeldenummer: 02024316.8
(22) Anmeldetag: 02.11.2002
(51) Int. Cl.: A01N 25/16

(54) **Verwendung von Heissschäumen zur Entfernung von unerwünschten Pflanzen**
Use of hot foams for eliminating weeds
Utilisation de mousses chaudes, afin d'eliminer des plantes parasites

(30) Priorität: 13.11.2001 DE 10155664
(43) Veröffentlichungstag der Anmeldung: 14.05.2003
(73) Patentinhaber: Cognis Deutschland GmbH & Co. KG, 40589 Düsseldorf (DE)
(72) Erfinder: Kopp-Holtwiesche, Bettina, Dr., 40599 Düsseldorf (DE); Willing, Andreas, Dr., 40699 Erkrath (DE); Welper, Sven, 45128 Essen (DE)

(56) Entgegenhaltungen:
- WO-A-01/45505
- US-A- 5 575 111
- QUARLES, W.: "Improved hot water weed control system" IPM PRACTITIONER, (2001) VOL. 23, NO. 1, PP. 1-4. 3 REF. ISSN: 0738-968X, XP000000011
- HANSSON D ET AL: "Effect of drop size, water flow, wetting agent and water temperature on hot -water weed control." CROP PROTECTION, CODEN: CRPTD6, Bd. 21, Nr. 9, 2002, Seiten 773-781, XP001145678 Univ.Sweden-Agr.Sci.

## Beschreibung

Die vorliegende Erfindung betrifft ein Verfahren zur Entfernung von unerwünschten Pflanzen mittels Heißschaum sowie die Verwendung von bestimmten nichtionischen Tensiden in Heißschäumen zur Entfernung unerwünschter Pflanzen.

Die Entfernung unerwünschten Pflanzenwachstums erfolgt regelmäßig durch Einsatz chemischer Substanzen, die entweder für die Pflanze direkt oder indirekt schädlich sind und zum Absterben der Vegetation führen. Die in diesem Bereich zum Einsatz kommenden Chemikalien sind allerdings nicht nur für die Pflanzen toxisch sondern können auch für Mensch und Tier gefährlich werden. Weiterhin handelt es sich hierbei vielfach um Substanzen, die schlecht oder gar nicht biologisch abbaubar sind oder sich in der Vegetationskette anreichern. Der Einsatz derartiger chemischer Unkrautvernichtungsmittel (Herbizide) ist daher stark limitiert und erfordert seitens des Bedienungspersonals besondere Qualifikationen. Neben den chemischen Methoden zur Unkrautvernichtung existieren auch mechanische Verfahren. Besonders effizient ist hierbei die Verwendung von heißer Luft und/oder heißem Wasser. Bei derartigen Verfahren wird auf die Pflanzen heiße Luft und/oder heißes Wasser aufgesprüht, wobei die Wachsschicht (die sog. Cutikula) auf den Pflanzenoberflächen aufgeschmolzen wird und die Pflanzen aufgrund dieser Verletzung eingehen. Die Vorteile dieser Verfahren im Vergleich zu den chemischen Mitteln liegt auf der Hand. Es besteht nicht die Gefahr der Kontamination der Umgebung; weiterhin ist kein besonders geschultes Bedienungspersonal notwendig.

Neben der Verwendung von heißem Wasserdampf ist auch die Verwendung von Heißschäumen zur Vernichtung unerwünschtem Pflanzenwachstums Stand der Technik. So beschreibt die AU-A 39335/97 ein Verfahren zur Kontrolle von Vegetation, wobei heißes Wasser unter Druck auf die Oberfläche der Pflanzen aufgebracht wird, um so die Pflanzen abzutöten. Dabei können gemäß der Offenbarung dieses Dokuments sowohl heißes Wasser selber als auch heißer Dampf oder Mischungen eingesetzt werden. Die US 5,575,111 beschreibt ebenfalls ein Verfahren zur Zerstörung und Kontrolle von unerwünschter Vegetation, wobei eine Mischung aus heißem Wasser und heißem Dampf unter Druck zu einem Heißschaum vermischt werden, der auf die Pflanzen aufgebracht wird und dort durch Zerstörung der Cutikula die gewünschte Wirkung erzielt. Die Schrift offenbart weiterhin, daß der Einsatz von Schäumen im Sinne der Lehre dieses Dokuments besonders vorteilhaft ist, da die Kontaktzeit zwischen heißem Schaum und der Pflanzenoberfläche länger ist als bei der Anwendung von heißem Wasserdampf. Dies führt zu einer gründlicheren und effizienteren Entfernung des Unkrauts. Zur Erzeugung des Schaums lehrt die US 5,575,111 den Einsatz von Tensiden, macht aber keine konkreten Aussagen über deren Struktur bzw. die Menge an Tensid. Die DE 199 61 664 A1 offenbart eine Heißschaumverfahren, wobei anionische Tenside, ggf. in Kombination mit Alkyl(oligo)glykosiden zur Schaumbildung eingesetzt werden, ohne daß dabei eine bestimmte Tensidkombination ausgelobt wird.

Obwohl der Einsatz von Schaum, beispielsweise im Sinne der oben zitierten US 5,575,111 zu einer effizienten Vernichtung bzw. Kontrolle von unerwünschten Pflanzenwachstum führt, zeigt auch dieses Verfahren in der Praxis noch Nachteile. So ist es insbesondere notwendig, daß der Schaum eine gewisse Mindestzeit vorzugsweise 20 bis 200 Sek. stabil bleibt, wobei auch die Struktur des Schaums nämlich möglichst feinporig von Bedeutung ist. Auf der anderen Seite darf der Schaum nicht zu lange stabil bleiben sondern muß innerhalb einer überschaubaren Zeit zerfallen. Das Problem, das die vorliegende Erfindung löst, ist also die Bereitsteiiung eines verbesserten Verfahrens zur Vernichtung von unerwünschtem Pflanzenwachstum durch Heißschaum. Die oben aufgezeigten Nachteile lassen sich erfindungsgemäß durch Auswahl bestimmter Tenside lösen.

Gegenstand der vorliegenden Erfindung ist daher ein Verfahren zur Entfernung von unerwünschten Pflanzen mittels Heißschaum, bei dem heißes Wasser unter Druck mit heißer Luft vermischt wird und so ein Schaum gebildet wird, der auf die Oberfläche der Pflanze aufgebracht wird, wobei das Wasser eine schäumende Tensidmischung, ausgewählt aus a) Alkyl(oligo)glycosiden der allgemeinen Formel (I) R¹O-(G)ₓ, in der R¹ für einen verzweigten oder unverzweigten Alkylrest mit 12 bis 22 C-Atomen, G für einen Zuckerrest mit 5 bis 6 C-Atomen und x für eine Zahl von 1 bis 10 steht, und b) Alkyl(oligo)glycosiden der allgemeinen Formel (II) R²O-(G)_{y} in der R² für einen verzweigten oder unverzweigten Alkylrest mit 6 bis 11 C-Atomen, steht, G für einen Zuckerrest mit 5 bis 6 C-Atomen und x für eine Zahl von 1 bis 10 steht, wobei ggf. noch weiteren Hilfs- und Zusatzstoffe enthalten sein können.

Die Herstellung von Heißschaum kann nach allen dem Fachmann hierfür bekannten Methoden erfolgen. Hier sei nur exemplarisch auf die Lehre der US 5,575,111 oder der bereits zitierten AU-A-39335/97 verwiesen. Entsprechende Apparaturen zur Erzeugung derartiger Heißschäume sind beispielsweise in der WO 99/02033 offenbart. In der Regel wird zur Erzeugung eines heißen Schaums heißes Wasser und heiße Luft unter Druck vermischt und durch entsprechende Vorrichtung der sich dann bildende Schaum auf die Pflanzen aufgebracht. Die Temperatur des Heißschaums muß in einem Bereich liegen der ausreicht, die Wachsschicht auf der Oberfläche der Pflanzen aufzuschmelzen. Vorzugsweise liegt die Temperatur des Heißschaumes im erfindungsgemäßen Verfahren im Bereich von 70 bis 120 °C, insbesondere im Bereich von 75 bis 110 °C und ganz besonders im Bereich von 80 bis 100 °C. Je nach eingesetztem Schaumerzeugungsverfahren werden 80 bis 85 Vol.-% heiße Luft mit 5 bis 20 Vol.-% heißem Wasser vermischt um entsprechende Heißschäume zu erzeugen. Das Wasser bzw. die Luft wird vor der Schaumerzeugung erhitzt und zwar vorzugsweise auf Temperaturen von 60 bis 100 °C, wobei die Luft auch auf höhere Temperaturen, beispielsweise bis 150 °C erhitzt werden kann. Der Heißdampf wird durch Vermischen des Wassers mit Druckluft erzeugt, wobei ein Luftdruck im Bereich von 1000 bis 10000 kPa bevorzugt ist.

Es sei an dieser Stelle angemerkt, daß mit den Heißschäumen nicht nur unerwünschte Pflanzen sondern auch Insekten, Pilze, Bakterien, Viren etc. entfernt werden können.

Erfindungswesentlich ist die Verwendung der Tensidmischungen im Wasser zur Erzeugung des Heißdampfs. Es hat sich gezeigt, daß gemäß der erfindungsgemäßen Lehre Heißschäume erhalten werden, die in ihrer Schäumzeit und in der Konsistenz des Schaumes optimale Bedingungen für die Zerstörung der Vegetation erreichen.

Die erfindungsgemäßen Tensidmischungen enthalten Alkyl(oligo)glycoside erwiesen. Alkyl- und/oder Alkenyloligoglykoside stellen bekannte nichtionische Tenside dar, die den Formeln (I) und (II) folgen, Sie können nach den einschlägigen Verfahren der präparativen organischen Chemie erhalten werden. Stellvertretend für das umfangreiche Schrifttum sei hier auf die Übersichtsarbeit von Biermann et al. in Starch/Stärke 45, 281 (1993), B.Salka in Cosm.Toil. 108, 89 (1993) sowie J.Kahre et al. in SÖFW-Journal Heft 8, 598 (1995) verwiesen.

Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside. Die Indexzahl x bzw. y in den allgemeinen Formeln (I) bzw. (II) gibt den Oligomerisierungsgrad (DP), d. h. die Verteilung von Mono- und Oligoglykosiden an und steht für eine Zahl zwischen 1 und 10. Während x bzw. y in einer gegebenen Verbindung stets ganzzahlig sein muß und hier vor allem die Werte 1 bis 6 annehmen kann, ist der Wert x bzw. y für ein bestimmtes Alkyloligoglykosid eine analytisch ermittelte rechnerische Größe, die meistens eine gebrochene Zahl darstellt. Vorzugsweise werden Alkyl- und/oder Alkenyloligoglykoside mit einem mittleren Oligomerisierungsgrad von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt.

Erfindungswesentlich ist es, die Tenside a) und b) als Mischung einzusetzen. nur dann ergibt sich eine synergistische Verstärkung der Schaumbildung. Bevorzugt ist es, die Tenside a) und b) im Mengenverhältnis im Gewichtsverhältnis 1 : 3 bis 3 : 1, vorzugsweise 1 : 2 bis 2 : 1 und insbesondere von 1 . 1,65 einzusetzen.

Der Alkyl- bzw. Alkenylrest R¹ in der Komponente a) kann sich von primären Alkoholen mit 12 bis 22, vorzugsweise 12 bis 18 Kohlenstoffatomen ableiten. Typische Beispiele sind Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische. Bevorzugt sind Alkyloligoglucoside auf Basis von gehärtetem C_{12/14}-Kokosalkohol mit einem DP von 1 bis 3, vorzugsweise DP von 1,1 bis 1,4.

Die Komponente b) steht dagegen für kurzkettige Alkyl(oliogo)glykoside, d.h. in der Formel (II) steht R² für Alkylreste mit 6 bis 11 C-Atome, wie sie beispielsweise von Hexanol, Heptanol, Octanol, Nonanol, Decanol und Undecanol abgeleitet werden können.

Zur Stabilisierung der Tensidmischungen aus a) und b) kann es vorteilhaft sein, geringe Mengen organsicher Säuren, vorzugsweise Zitronensäure zuzusetzen. Die Mischungen sollten insbesondere einen pH-Wert von 5 bis 7,5 aufweisen.

Die Mischungen können sowohl mit hohen Aktivsubstanzgehalten verwendet werden, beispielsweise 50 bis 60 Gew.-%, aber auch in Form niedrigviskoser Formulierungen mit 10 bis 30 Gew.-%. Der Rest ist Wasser oder ein anderes geeignetes Lösungsmittel.

Die tensidischen wäßrigen Zubereitungen, die für die Heißdampferzeugung im erfindungsgemäßen Verfahren verwendet werden weisen vorzugsweise alkalische pH-Werte und insbesondere im Bereich von 8 bis 12 auf.

Zur weiteren Stabilisierung der Schäume im erfindungsgemäßen Verfahren hat es sich als vorteilhaft erwiesen, dem Wasser vor der Luftzugabe aber nach der Zugabe der Tenside bestimmte Polymere, ausgewählt aus der Gruppe der Polyacrylate oder der anionisch modifizierten polymeren Heterosaccharide, zuzusetzen. Aus letzter Gruppe hat sich insbesondere das Xanthan gum als besonders vorteilhaft erwiesen. Bei Xanthan gum handelt es sich um ein mikrobielles anionisches Heteropolysaccharid. Es wird von Xanthomonas campestris und einigen anderen Species unter aeroben Bedingungen produziert. Xanthan gum wird aus einer Kette mit β-1,4-gebundener Glucose (Cellulose) mit Seitenketten gebildet. Die Struktur der Untergruppen ("repeated units") besteht aus Glucose, Mannose, Glucuronsäure, Acetat und Pyruvat. Die Anzahl der Pyruvat-Einheiten bestimmt die Viskosität des Xanthan gum. Weitere geeignete Polymere sind Stärke und polymere Cellulosederivate sowie Guar, Methylcellulose, Carboxymethylcellulose, Hydroxyethylcellulose, Hydroxypropylguar, Alginate und/oder Polyacrylsäuren.

Die Menge an Polymer, die im erfindungsgemäßen Verfahren zugesetzt werden kann, liegt vorzugsweise im Bereich von 0,01 bis 1 Gew.-% (bezogen auf Aktivsubstanz). Die gemäß dem vorliegenden Verfahren hergestellten Heißdämpfe sind feinporig und über einen ausreichenden Zeitraum stabil. Vorteilhaft ist es aber, wenn nur die Tensidmischungen a) und b) eingesetzt werden und auf den Zusatz weiterer Hilfsstoffe, insbesondere anionischer Tenside verzichtet wird.

Ein weiterer Aspekt der vorliegenden Erfindung betrifft die Formulierung der erfindungsgemäßen wässerigen Lösungen für die Heißdampferzeugung. Es kommt beim Einsatz zur Unkrautvernichtung zu einer effizienten Wärmeübertragung zwischen Schaum und Pflanze, die zu einer schnellen und vollständigen Zerstörung unerwünschten Pflanzenwachstums führt. Das erfindungsgemäße Verfahren kann ganz allgemein eingesetzt werden um Straßen und Flächen, beispielsweise im kommunalen Bereich, insbesondere für eine Unkrautentfernung am Straßenrand besonders geeignet. Es eignet sich aber auch um Gleisanlagen oder Flughäfen und ähnliche Anlagen von Unkraut zu befreien. Auch im Obstbau ist der Einsatz eines derartigen Verfahrens möglich. vorteilhaft ist bei der Verwendung der erfindungsgemäßen Mischungen, daß die Tenside gut biologisch abbaubar sind und eine niedrige Einstufung der Wassergefährdungsklasse möglich ist. Durch die synergistische Verstärkung der Schaumwirkung kann die aufgebrachte Tensidmenge wirksam verringert werden, verglichen mit Verfahren aus dem Stand der Technik.

Ein weiterer Gegenstand der vorliegenden Erfindung betrifft daher die Verwendung von Tensidmischungen wie oben beschrieben in Heißschäumen zur Entfernung von unerwünschten Pflanzen.

### Beispiele

Zur Demonstration der erfindungsgemäßen Lehre wurden Schäume aus wässerigen Lösungen unterschiedlicher Tenside bzw. Tensidmischungen hergestellt und untersucht. Die Konzentration der Tenside in Wasser betrug jeweils 0,5 Gew.-%. Gemessen wurde die Zeit in der der Schaum stabil blieb in Sekunden. Höhere Werte zeigen einen bessere Schaumbildung an.

Die Ergebnisse sind in Tabelle 1 wiedergegeben:

**Tabelle 1**

| | Tensid | nach 100 ml | nach 200 ml |
|---|---|---|---|
| V1 | C8-10-Alkyl-1,5-glucosid | 75 | 17 |
| V2 | C12-16-Alkyl-1,4-glucosid | 30 | 10 |
| V3 | C12-17-Alkansulfonat-Natrium-Salz | 10 | 0 |
| V4 | Dodecylbenzolsulfonat-Natrium-Salz | 40 | 12 |
| A | C8-16-Alkyl-1,4-glucosid Mengenverhältnis C12/14 : C8/10 ist 1:1,65 | 165 | 30 |

Man erkennt, daß die erfindungsgemäße Mischung A deutlich stabilere Schäume liefert als die Einzelkomponenten (siehe V1 und V2), aber auch bessere Ergebnisse liefert als handelsübliche Produkte auf Basis anionischer Tenside.

## Patentansprüche

1. Verfahren zur Entfernung von unerwünschtem Pflanzen mittels Heißschaum, indem heißes Wasser unter Druck mit heißer Luft vermischt wird und so ein Schaum gebildet wird, der auf die Pflanzen aufgebracht wird, **dadurch gekennzeichnet, daß** das Wasser eine schäumende Tensidmischung, ausgewählt aus
a) Alkyl(oligo)glycosiden der allgemeinen Formel (I) R¹O-(G)ₓ,
in der R¹ für einen verzweigten oder unverzweigten Alkylrest mit 12 bis 22 C-Atomen, G für einen Zuckerrest mit 5 bis 6 C-Atomen und x für eine Zahl von 1 bis 10 steht, und
b) Alkyl(oligo)glycosiden der allgemeinen Formel (II) R²O-(G)_{y}
in der R2 für einen verzweigten oder unverzweigten Alkylrest mit 6 bis 11 C-Atomen, steht, G für einen Zuckerrest mit 5 bis 6 C-Atomen und x für eine Zahl von 1 bis 10 steht,
ggf. in Kombination mit weiteren Hilfs- und Zusatzstoffen, enthält.

2. Verfahren nach Anspruch 1, **dadurch gekennzeichnet, daß** die Tenside a) und b) im Gewichtsverhältnis 1 : 3 bis 3 : 1, vorzugsweise 1 : 2 bis 2 : 1 und insbesondere von 1 : 1,65 eingesetzt werden.

3. Verfahren nach den Ansprüchen 1 bis 2, **dadurch gekennzeichnet, daß** die Komponente a) ausgewählt ist aus Verbindungen der Formel (I) in der R¹ für eine Mischung aus Alkylresten der C-Kettenlänge C₁₂-C₁₄ steht.

4. Verfahren nach den Ansprüchen 1 bis 3, **dadurch gekennzeichnet, daß** die Komponente b) ausgewählt ist aus Verbindungen der Formel (II) in der R² für eine Mischung aus Alkylresten der C-Kettenlänge C₈-C₁₀ steht.

5. Verfahren nach den Ansprüchen 1 bis 4, **dadurch gekennzeichnet, daß** in den Formeln (I) und (II) G für einen Glukoserest steht und x und y unabhängig voneinander die Werte von 1,2 bis 1,4 einnehmen.

6. Verfahren nach den Ansprüchen 1 bis 5, **dadurch gekennzeichnet, daß** der Heißschaum eine Temperatur im Bereich von 70 bis 120 °C, vorzugsweise 75 bis 110 °C und insbesondere 80 bis 100 °C aufweist.

7. Verfahren nach den Ansprüchen 1 bis 6, **dadurch gekennzeichnet, daß** die Tensidmischungen aus a) und b) im Wasser in Mengen (bezogen auf Aktivsubstanz) von 0,1 bis 25 Gew.-%, vorzugsweise von 0,1 bis 15 Gew.-% und insbesondere von 0,25 bis 8 Gew.-%, enthalten sind.

8. Verfahren nach den Ansprüchen 1 bis 10, **dadurch gekennzeichnet, daß** die Zusatzstoffe im Wasser in Mengen (bezogen auf Aktivsubstanz) von 1 bis 25 Gew.-%, vorzugsweise 0,1 bis 20 Gew.-% und insbesondere von 0,1 bis 15 Gew.-% enthalten sind.

9. Verwendung von Tensidmischungen gemäß Anspruch 1 in Heißschäumen zur Entfernung von unerwünschten Pflanzen.

## Claims

1. A process for removing unwanted plants by hot foam in which hot water is mixed under pressure with hot air to form a foam which is applied to the surface of the plant, **characterized in that** the water contains a foaming surfactant mixture selected from
a) alkyl (oligo)glycosides corresponding to general formula (I) R¹O-(G)ₓ, in which R¹ is a branched or unbranched alkyl group containing 12 to 22 carbon atoms, G is a sugar unit containing 5 to 6 carbon atoms and x is an integer of 1 to 10, and
b) alkyl (oligo)glycosides corresponding to general formula (II) R²O-(G)_{y}, in which R² is a branched or unbranched alkyl group containing 6 to 11 carbon atoms, G is a sugar unit containing 5 to 6 carbon atoms and y is a number of 1 to 10,
optionally in combination with other auxiliaries and additives.

2. A process as claimed in claim 1, **characterized in that** the surfactants a) and b) are used in a ratio by weight of 1:3 to 3:1, preferably 1:2 to 2:1 and more particularly 1:1.65 .

3. A process as claimed in claims 1 and 2, **characterized in that** component a) is selected from compounds corresponding to formula (I) in which R¹ represents a mixture of C₁₂₋₁₄ alkyl groups.

4. A process as claimed in claims 1 to 3, **characterized in that** component b) is selected from compounds corresponding to formula (I) in which R² represents a mixture of C₈₋₁₀ alkyl groups.

5. A process as claimed in claims 1 to 4, **characterized in that**, in formulae (I) and (II), G is a glucose unit and x and y independently of one another have values of 1.2 to 1.4.

6. A process as claimed in claims 1 to 5, **characterized in that** the hot foam has a temperature of 70 to 120°C, preferably 75 to 110°C and more particularly 80 to 100°C.

7. A process as claimed in claims 1 to 6, **characterized in that** the surfactant mixtures of a) and b) are present in the water in quantities (based on active substance) of 0.1 to 25% by weight, preferably 0.1 to 15% by weight and more particularly 0.25 to 8% by weight.

8. A process as claimed in claims 1 to 10, **characterized in that** the additives are present in the water in quantities (based on active substance) of 1 to 25% by weight, preferably 0.1 to 20% by weight and more particularly 0.1 to 15% by weight.

9. The use of the surfactant mixtures claimed in claim 1 in hot foams for removing unwanted plants.

## Revendications

1. Procédé d'élimination de plantes indésirables à l'aide de mousses chaudes, en mélangeant de l'eau chaude sous pression avec de l'air chaud pour former ainsi une mousse qui est appliquée sur les plantes, **caractérisé en ce que** l'eau contient un mélange d'agents tensioactifs moussants choisis parmi
a) des alkyl(oligo)glycosides de formule générale
(I) R¹0-(G)ₓ
dans laquelle R¹ représente un reste alkyle ramifié ou non ramifié, ayant de 12 à 22 atomes de carbone, G représente un reste de sucre ayant de 5 à 6 atomes de carbone, et x représente un nombre allant de 1 à 10, et
b) des alkyl(oligo)glycosides de formule générale
(II) R²0-(G)_{y}
dans laquelle R² représente un reste alkyle ramifié ou non ramifié ayant de 6 à 11 atomes de carbone, G représente un reste de sucre ayant de 5 à 6 atomes de carbone et y représente un nombre allant de 1 à 10,
le cas échéant en combinaison avec d'autres adjuvants et additifs.

2. Procédé selon la revendication 1, **caractérisé en ce que** les agents tensioactifs a) et b) sont utilisés dans un rapport en poids de 1:3 à 3:1, de préférence de 1:2 à 2:1 et en particulier de 1:1,65.

3. Procédé selon les revendications 1 à 2, **caractérisé en ce que** le composant a) est choisi parmi les composés de formule (I) dans lesquels R¹ représente un mélange de restes alkyle ayant une longueur de chaîne de C₁₂ à C₁₄.

4. Procédé selon les revendications 1 à 3, **caractérisé en ce que** le composant b) est choisi parmi les composés de formule (II) dans lesquels R² représente un mélange de restes alkyle ayant une longueur de chaîne de C₈ à C₁₀.

5. Procédé selon les revendications 1 à 4, **caractérisé en ce que** dans les formules (I) et (II), G représente un reste de glucose et x et y, prennent indépendamment l'un de l'autre, les valeurs allant de 1,2 à 1,4.

6. Procédé selon les revendications 1 à 5, **caractérisé en ce que** la mousse chaude possède une température dans la plage de 70 à 120°C, de préférence de 75 à 110°C et en particulier de 80 à 100°C.

7. Procédé selon les revendications 1 à 6, **caractérisé en ce que** les mélanges d'agents tensioactifs a) et b) sont présents dans l'eau en quantités (rapportées à la substance active) allant de 0,1 à 25 % en poids, de préférence de 0,1 à 15% en poids et en particulier de 0,25 à 8% en poids.

8. Procédé selon les revendications 1 à 7, **caractérisé en ce que** les additifs sont présents dans l'eau en quantités (rapportées à la substance active) allant de 1 à 25% en poids, de préférence de 0,1 à 20% en poids et en particulier de 0,1 à 15% en poids.

9. Utilisation de mélanges d'agents tensioactifs obtenus selon la revendication 1, dans les mousses chaudes, en vue de l'élimination de plantes indésirables.
